# EUROPEAN PATENT APPLICATION

(11) **EP 0 693 305 A1**
(43) Date of publication of application: **24.01.1996**
(21) Application number: 95109115.6
(22) Date of filing: 13.06.1995
(51) Int. Cl.: A62D 3/00

(54) **Molten salt destruction of composite materials**

(30) Priority: 21.07.1994 US 278584
(71) Applicant: ROCKWELL INTERNATIONAL CORPORATION, Seal Beach, California 90740-8250 (US)
(72) Inventor: Schnittgrund, Gary D., Granada Hills, California 91344 (US); Morgan, Peter E. D., Thousand Oaks, California 91360 (US)
(74) Representative: Wächtershäuser, Günter, Prof. Dr.

(57) **Abstract**

A process for destruction of composite materials capable of oxidation in a molten salt such as graphite fiber reinforced epoxy materials, comprising introducing such composite materials into a molten salt bath, e.g. molten sodium carbonate, at elevated temperature, e.g. between about 900 and 1000°C, together with air or oxygen, and catalytically oxidizing and destroying the composite material and recovering an off-gas containing chiefly CO₂. When employing composites containing ceramic material such as silicon, as for example silicon carbide fiber reinforced carbon matrix, the silicon is converted to a silicate as a spent salt retained in the molten salt bath, while the carbon is converted to CO₂.

## Description

### BACKGROUND OF THE INVENTION

### 1. Field of the Invention

This invention relates to the destruction of composite materials, and is particularly directed to an improved process for destruction of composite materials, such as graphite fiber reinforced materials, e.g. graphite fiber reinforced epoxy, under conditions to form non-hazardous reaction products.

### 2. Description of the Prior Art

The growing perception of society is that in order to be environmentally conscious the ramifications of the technology and cost of safe disposal of materials and systems must be considered even while still involved in producing them. An important class of such materials are fiber composites comprised of fibers in a matrix. There has been great interest in strong, lightweight composite materials in general, and in graphite fiber reinforced materials or composites such as graphite fiber reinforced epoxy composites, particularly for aircraft.

However, little consideration has been given to the ultimate safe disposal of such materials. It is widely appreciated that very fine graphite fiber for example, in such composites may be hazardous to health and electronic equipment and is a particular problem in that it will not easily be destroyed in the environment. Composites composed of parts of very different destructibilities, are generally difficult to incinerate or dispose of in other known ways.

Molten salt oxidation (MSO) has been found to be a suitable technology for destroying various types of hazardous organic waste. The technology achieves this destruction by the catalytic oxidation of the organic compounds by molten salts at elevated temperatures.

U. S. Patent No. 3,708,270 discloses a process for pyrolyzing carbonaceous materials such as solid wastes by use of a molten salt comprising an alkali metal carbonate and from about 1 to 25 wt % of an alkali metal sulfide.

U. S. Patent No. 3,845,190 discloses a process for disposing of organic pesticides by means of oxidation in a molten salt comprising an alkali metal carbonate.

U. S. Patent No. 3,916,617 discloses a process for the partial oxidation and complete gasification of a carbonaceous material such as coal to produce a combustible gas, which utilizes a molten salt comprising an alkali metal carbonate and about 1 to 25 wt % of an alkali metal sulfide.

### SUMMARY OF THE INVENTION

According to the invention, previously difficult-to-destroy complex composites such as graphite, silicon carbide and silicon nitride, fiber reinforced matrix materials can be destroyed by molten salt oxidation at elevated temperatures, e.g. about 900° to about 1000°C in a molten salt such as sodium carbonate in the presence of air or oxygen. Thus, both the fibers and matrix of such composites can be destroyed substantially simultaneously in the above molten salt bath.

Thus, for example, in the case of a graphite fiber reinforced epoxy composite, such composite, e.g. cut or shredded into chunks, can be introduced into the molten sodium carbonate at elevated temperature as noted above, with air or oxygen introduced into the molten salt bath, and catalytically oxidizing and destroying both the fibers and matrix of the composite material, to form an off-gas consisting essentially of CO₂ and water vapor.

Silicon carbide and silicon nitride fiber reinforced composites can be similarly treated to convert the silicon-containing values to silicates in the molten bath, while also producing off-gases which can be in the form of CO₂, nitrogen or nitrous oxides, depending on the composition of the matrix material.

In place of alkali metal based molten salt such as sodium carbonate, alkaline earth based salts such as calcium based salts can be employed wholly or partially as the molten salt bath.

### OBJECTS OF THE INVENTION

It is accordingly an object of the present invention to provide an improved process for the destruction of composite materials comprised of a fiber reinforced matrix material.

Another object is the provision of a process for readily destroying and converting fiber reinforced materials or composites such as fiber reinforced epoxy, into non-hazardous reaction products.

Yet another object is to provide a procedure for destruction of composite materials as above described, by molten salt oxidation at elevated temperature to form an off-gas including carbon dioxide, and spent salts such as silicates in the molten salt bath, depending upon the composition of the composite material.

Other objects and advantages will appear hereinafter.

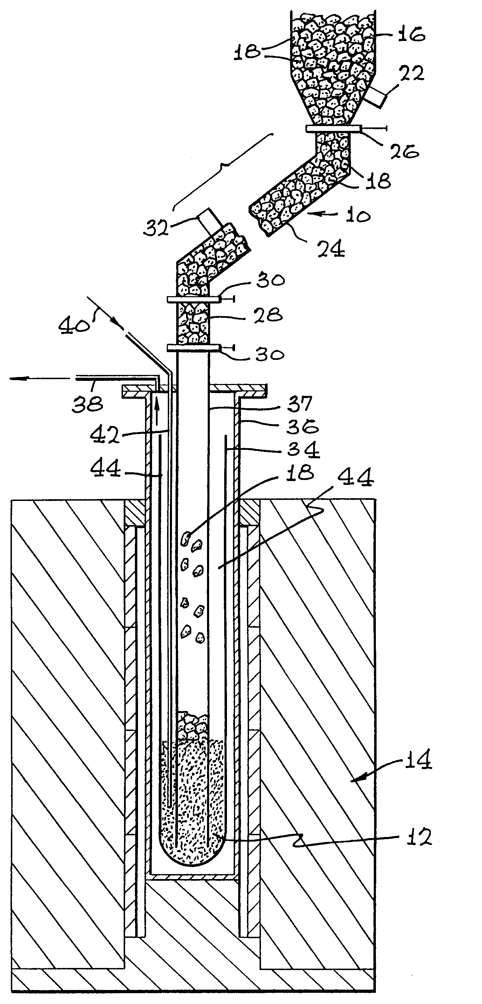

### DESCRIPTION OF THE DRAWING

The sole figure of the drawing represents a system for feeding chunks of composite material to a molten salt bath for destruction therein according to the invention.

### DETAILED DESCRIPTION OF THE INVENTION AND PREFERRED EMBODIMENTS

Broadly according to the invention, there is provided a process for destroying composite material capable of oxidation in a molten salt, which comprises feeding a composite material formed of fibers and a matrix into a molten salt bath containing a molten salt such as alkali metal carbonate, feeding oxygen into the molten salt bath, and catalytically oxidizing and destroying such composite material.

Composite materials which can be destroyed according to the invention are those that will completely decompose by molten salt oxidation. More specifically, such composite materials are fiber reinforced matrix materials. The composites according to the invention are formed of carbon or graphite fibers, silicon carbide fibers or silicon nitride fibers. The matrix materials of such composites can consist of carbon, resin, silicon carbide or silicon nitride or various inorganic glasses. The various resins which can be employed as matrix materials are thermosetting resins such as epoxy, epoxynovolac, polyamide and polyimide. High temperature thermoplastic matrix materials such as "PEEK" resin (polyether ether ketone resin), polyphenylene sulfone, polycarbonate resins and bismaleimides can also be employed. Resins containing inorganic components such as silicone resins containing silicon also can be employed.

Specific examples of composite materials which can be destroyed according to the invention are graphite fiber reinforced epoxy, graphite fiber reinforced epoxy-novolac, carbon fiber reinforced carbon. Also, the class of ceramic fiber and matrix composites which can be employed include silicon carbide fiber with a carbon matrix, silicon carbide fibers with a silicon carbide matrix, carbon fibers with a silicon carbide or silicon nitride matrix, silicon nitride fiber with a silicon nitride matrix, carbon or graphite fibers with a glass matrix, and silicon carbide fibers with a glass matrix.

The composite materials are generally cut or shredded into suitably sized chunks before being fed to the molten salt bath.

The molten salt bath comprises substantially an alkali metal or an alkaline earth based salt. Thus, alkali metal carbonate such as sodium carbonate, potassium carbonate or lithium carbonate, or mixtures thereof can be employed, e.g. mixtures of 50% sodium carbonate, 50% potassium carbonate by weight. Where sodium carbonate is employed as molten salt, temperature of reaction ranges from about 900 to about 1000°C. Also, a mixture of alkali metal carbonate such as sodium carbonate and a minor proportion of alkali metal halide, such as sodium chloride or potassium chloride can be employed, e.g. a mixture of 90% sodium carbonate and 10% sodium chloride. Use of such mixtures will reduce the temperature in the molten salt bath, e.g. to a range of say 600 to about 800°C. However, if silicon carbide or silicon nitride is present in the composite being treated, higher molten salt temperatures, e.g. in the 900 to 1000°C range is employed, utilizing sodium carbonate melt, since silicon carbide and silicon nitride are not as prone to oxidation as carbon in such composites.

Also, alkaline earth based salts such as calcium based salts, e.g. a mixture of calcium chloride and a minor proportion of calcium oxide, e.g. about 2 to about 20% by weight calcium oxide, can be employed.

The molten salt oxidation is carried out in the presence of air or oxygen. The product of reaction where the composite is formed of carbon alone is CO₂, sufficient oxygen being employed to convert all of such carbon to CO₂, with relatively little CO present. Where the composite contains a resinous material such as graphite reinforced epoxy, the products are CO₂ and water vapor. Where silicon carbide is present in the composite, either as fibers or matrix material, or both, the carbon is oxidized to carbon dioxide and the silicon is oxidized to silica, which converts to a silicate in an alkali carbonate molten bath. Where silicon nitride is present in the composite, either as fibers or matrix material, or both, the nitride decomposes and comes off as nitrogen or a nitrous oxide, which can be recovered, with the silicon again being converted to a silicate in the bath. Preferably, excess oxygen is employed in the reaction, e.g. a 20% excess.

Referring to the Figure of the drawing, a feed system 10 is shown which is designed to transport composite material to a molten salt bath 12 contained in an electric furnace 14, for destruction of such composite material.

For this purpose, a feed hopper 16 for receiving the composite material cut into chunks and indicated at 18 is located above the electric furnace containing the molten salt bath. A vibrator device indicated at 22 is provided on the feed hopper 16 to facilitate movement of the composite material chunks 18 out of the feed hopper and into an inclined chute 24 communicating with the bottom of the feed hopper 16. The vibrator device 22 can be any well known type of vibrator such as a pneumatic or electomechanical vibrator. Incremental passage of the composite waste chunks 18 from feed hopper 16 into the inclined chute is controlled by means of a control valve 26.

The inclined chute 24 terminates at its lower end in a lock hopper 28 having a double lock valve arrangement as indicated at 30. The inclined chute 24 is preferably vibrated by means of a vibrator at 32 similar to vibrator 22, to facilitate transport of the composite chunks 18 downwardly through the inclined chute 24. By means of the lock hopper 28, the feed chunks 18 introduced therein from the chute 24 can be dropped in increments via valve 30 into the molten salt bath 12 in furnace 14. The molten salt bath 12 into which the composite waste chunks 18 are dropped from the lock hopper 28, is contained in an alumina tube 34 located within a furnace liner 36, e.g. of Inconel within the electric furnace. The molten salt bath 12 contains an alkali metal carbonate such as sodium carbonate. Temperature of the molten salt bath is maintained from about 900°C to about 1000°C.

The waste composite feed chunks 18 are fed incrementally from lock hopper 28 and dropped through a downcomer 37 into the molten salt bath 12 in tube 34 for submerged reactive contact of the composite feed chunks with the molten salt and decomposition or oxidation of the feed chunks. For carrying out the decomposition or oxidation of the composite feed chunks 18 in the salt bath 12, process air is introduced at 40 and passed downwardly through a narrow tube 42 provided within tube 34 and into the molten salt bath 12. The product gas formed in the reaction, a mixture of CO₂, nitrogen and water vapor where the composite is, for example, graphite reinforced epoxy, passes upwardly through an annulus 44 between the wall of tube 34 and downcomer 37 to the gas vent 38.

Other conveyor means can also be employed for feeding waste composite material in the form of chunks into submerged contact with the molten salt bath for destruction therein according to the invention.

The following are examples of practice of the invention:

### EXAMPLE 1

Graphite fiber reinforced epoxy matrix lightweight composite is cut into chunks and such chunks are fed to a molten sodium carbonate bath at 1000°C and submerged therein. The sodium carbonate bath is vigorously sparged with air at about 2 feet per second. The epoxy material is converted to carbon dioxide and water vapor, which are released as part of the off-gas. The carbon fiber reacts with the oxygen in the air which is fed to the molten sodium carbonate bath, and is converted to carbon dioxide, which also is released with the off-gas. The sodium carbonate acts as a catalyst in these oxidation reactions.

### EXAMPLE 2

Silicon carbide fiber in a silicon carbide matrix composite cut into chunks are fed to a molten sodium carbonate bath at 1000°C as described in Example 1. Air is introduced and the silicon carbide in both the fibers and matrix is catalytically oxidized to form an off-gas containing CO₂, and the silicon catalytically oxidizes to silica which is retained in the molten sodium carbonate as spent sodium silicate.

### EXAMPLE 3

Carbon fiber in a graphite matrix composite is cut into chunks which are fed to a molten bath of sodium carbonate and 10% sodium chloride at 900°C and subjected to submerged contact therein. The carbon in both the fibers and matrix is catalytically oxidized in the presence of air passed into the molten bath as described in Example 1 to form an off-gas containing CO₂.

### EXAMPLE 4

Silicon nitride fiber in a silicon nitride matrix composite is cut into chunks which are fed into a molten sodium carbonate bath at 1000°C and subjected to submerged contact therein. Air is passed into the molten sodium carbonate bath. The silicon in the silicon nitride fibers and matrix is catalytically oxidized to silica, retained in the molten sodium carbonate bath as sodium silicate, and the nitrogen in the silicon nitride fibers and matrix is catalytically oxidized to oxides of nitrogen released as part of the off-gas.

### EXAMPLE 5

Carbon or silicon carbide fiber in a glass or inorganic silicone type resin matrix composite is cut into chunks which are fed into a molten sodium carbonate bath at 1000°C and subjected to submerged contact therein. Air is passed into the molten sodium carbonate bath. The silicon in the glass or resinous matrix and in the silicon carbide fibers is catalytically oxidized to silica, retained in the molten sodium carbonate bath as sodium silicate, and the carbon in the carbon or silicon carbide fibers is catalytically oxidized to carbon dioxide.

From the foregoing, it is seen that the invention provides a simple and efficient process for destroying composite waste materials by subjecting such composite materials to catalytic oxidation in a molten salt bath, e.g. sodium carbonate, to convert all portions of such waste to essentially non-hazardous products.

It is to be understood that what has been described is merely illustrative of the principles of the invention and that numerous arrangements in accordance with this invention may be devised by one skilled in the art without departing from the spirit and scope thereof.

## Claims

1. A process for destruction of composite materials capable of oxidation in a molten salt which comprises
introducing a composite material formed of fibers and a matrix into a molten salt bath,
introducing oxygen into said molten salt bath and catalytically oxidizing and destroying said composite material.

2. The process of claim 1, said composite formed of fibers selected from the group consisting of carbon, silicon carbide and silicon nitride fibers.

3. The process of claim 1, said composite formed of a matrix selected from the group consisting of carbon, a resin, silicon carbide, silicon nitride and glass.

4. The process of claim 3, said composite being selected from the group consisting of graphite fiber reinforced epoxy matrix, graphite fiber reinforced polyether ether ketone matrix, carbon fiber reinforced carbon matrix, silicon carbide reinforced silicon carbide matrix and silicon nitride reinforced silicon nitride matrix, and carbon fiber reinforced glass matrix and silicon carbide fiber reinforced glass matrix.

5. The process of claim 1, said molten salt bath comprising a member selected from the group consisting of an alkali metal and alkaline earth based salt.

6. The process of claim 5, said molten salt bath consisting of a member selected from the group consisting of alkali metal carbonate, and mixtures thereof with an alkali metal halide.

7. The process of claim 6, said molten salt bath comprising substantially alkali metal carbonate.

8. The process of claim 7, said molten salt also including a minor proportion of sodium chloride.

9. The process of claim 6, said molten salt consisting of sodium carbonate at a temperature of about 900° to about 1000°C.

10. The process of claim 5, said molten salt consisting of a mixture of calcium chloride and a minor proportion of calcium oxide.

11. A process for destruction of composite materials capable of decomposition in a molten salt which comprises
introducing into a molten sodium carbonate bath at a temperature of about 900° to about 1000°C said composite material formed of fibers and a matrix,
introducing air into said molten sodium carbonate bath and catalytically oxidizing and destroying said composite material in said molten bath.

12. The process of claim 11, said composite formed of fibers selected from the group consisting of carbon, silicon carbide and silicon nitride fibers.

13. The process of claim 12, said composite material being a graphite fiber reinforced epoxy, and recovering CO₂ and water vapor as an off-gas in said molten salt oxidation.

14. The process of claim 12, said composite material being a graphite fiber reinforced polyether ether ketone, and recovering CO₂ and water vapor as an off-gas in said molten salt oxidation.

15. The process of claim 12, said composite material being a silicon carbide fiber reinforced matrix, and forming a silicate in said molten salt oxidation.

16. The process of claim 15, said matrix selected from the group consisting, of carbon and silicon carbide.

17. The process of claim 12, said composite material being a silicon nitride fiber reinforced matrix, and forming a nitrogen oxide off-gas and a silicate in said molten salt oxidation.

18. The process of claim 17, said matrix being silicon nitride.

19. The process of claim 12, said composite material being carbon fiber reinforced carbon, and recovering CO₂ as an off-gas.
